Europäisches Patentamt

European Patent Office

Office européen des brevets

(19)

(11) Veröffentlichungsnummer : **0 281 122 B1**

# (12) EUROPÄISCHE PATENTSCHRIFT

(45) Veröffentlichungstag der Patentschrift :
**15.05.91 Patentblatt 91/20**

(51) Int. Cl.$^5$ : **C07F 9/40**

(21) Anmeldenummer : **88103226.2**

(22) Anmeldetag : **03.03.88**

(54) Verfahren zur Herstellung von Vinylphosphonsäuredialkylestern.

(30) Priorität : **06.03.87 DE 3707149**

(43) Veröffentlichungstag der Anmeldung :
**07.09.88 Patentblatt 88/36**

(45) Bekanntmachung des Hinweises auf die
Patenterteilung :
**15.05.91 Patentblatt 91/20**

(84) Benannte Vertragsstaaten :
**BE CH DE FR GB IT LI NL**

(56) Entgegenhaltungen :
**EP-A- 0 065 739**

(73) Patentinhaber : **HOECHST
AKTIENGESELLSCHAFT
Postfach 80 03 20
W-6230 Frankfurt am Main 80 (DE)**

(72) Erfinder : **Roscher, Günter, Dr.
Hölderlinstrasse 64
W-6233 Kelkheim (Taunus) (DE)**
Erfinder : **Kleiner, Hans-Jerg, Dr.
Altkönigstrasse 11a
W-6242 Kronberg/Taunus (DE)**
Erfinder : **Ihl, Gabriele, Dr.
Falkstrasse 68
W-6000 Frankfurt am Main 90 (DE)**
Erfinder : **Leipe, Hermann
Zeilsheimer Strasse 46
W-6233 Kelkheim (Taunus) (DE)**

EP 0 281 122 B1

## Beschreibung

Vinylphosphonsäuredialkylester sind als Vorprodukte für die Herstellung reiner Vinylphosphonsäure sowie als Monomere zur Mischpolymerisation für die Herstellung von Klebstoffen oder flammfesten Kunststoffen von Bedeutung. Sie lassen sich bisher auf verschiedenen Wegen, jedoch nur in mehrstufigen Arbeitsweisen herstellen. So erhält man nach dem Verfahren der DE-OS 30 01 894 durch Erhitzen von 2-Acetoxyäthanphosphonsäuredialkylestern in Gegenwart saurer oder basischer Katalysatoren auf 150 bis 270°C Gemische von Vinylphosphonsäurederivaten, die neben Vinylphosphonsäuremonoalkylestern und mehreren anderen Produkten auch geringe Mengen (im Höchstfall 23%) Vinylphosphonsäuredialkylester enthalten.

Im Hinblick auf diese unbefriedigenden Ergebnisse ist man gemäß DE-OS 31 20 437 zu einem verbesserten Zweistufenverfahren übergegangen, indem man das bei der vorgenannten Reaktion erhaltene Reaktionsprodukt anschließend mit Carbonsäure-orthoestern zu den gewünschten Vinylphosphonsäuredialkylestern umgesetzt hat.

In keiner der genannten Literaturstellen ist also die unmittelbare Gewinnung von Vinylphosphonsäuredialkylestern beschrieben, die als Destillat aus der Spaltreaktion erhalten und anschließend durch Destillation weiter gereinigt werden können.

Es wurde nun überraschend gefunden, daß die Spaltung der Acetoxyäthanphosphonsäuredialkylester nicht in der beschriebenen Weise zu Gemischen von Derivaten der Vinylphosphonsäure, sondern direkt zu Vinylphosphonsäuredialkylestern erfolgt, wenn man bei 150 bis 270, vorzugsweise bei 180 bis 250°C, 2-Acetoxyäthanphosphonsäuredialkylester bei einem Partialdruck der Summe der Komponenten des Reaktionssystems zwischen 1 und 500 mbar, vorzugsweise zwischen 5 und 100 mbar, in Berührung mit einem flüssigen, katalytisch wirkenden, sauren oder basischen Medium spaltet und die entstehenden Vinylphosphonsäuredialkylester und andere flüchtige Reaktionsprodukte dampfförmig abzieht.

Der Begriff "Partialdruck der Summe der Komponenten des Reaktionssystems" umfaßt sowohl den Druck des 2-Acetoxyäthanphosphonsäureesters als auch den der daraus gebildeten Reaktionsprodukte, die großenteils flüchtiger sind als das Ausgangsmaterial und insoweit aus dem Gemisch herausdestilliert werden können. Der genannte Druck, z.B. zwischen 10 und 100 mbar, läßt sich auf verschiedene Weisen einstellen. Nach einer Ausführungsform arbeitet man unter vermindertem Druck; nach einer anderen Arbeitsweise arbeitet man bei einem Druck von über 500 mbar, wobei die Differenz zwischen dem Gesamtdruck und dem gewünschten Partialdruck der Komponenten des Reaktionssystems durch ein gegenüber diesen unter den Reaktionsbedingungen inertes Gas erzeugt werden kann. Als solche inerten Gase kommen die in der Praxis üblichen in Frage, vor allem Stickstoff, gegebenenfalls aber auch Kohlendioxid oder leichte Kohlenwasserstoffe wie Methan oder Äthan, und in besonderen Fällen auch Edelgase wie Argon. Natürlich können auch Gemische verschiedener solcher Gase verwendet werden.

Als katalytisch wirkende Medien eignen sich die gleichen, die auch in der DE-OS 31 20 437 genannt werden, und zwar sowohl saure als auch basische. Als saure Medien eignen sich z.B. Schwefelsäure, Phosphorsäure, halogenhaltige Carbonsäuren wie Di- und Trichloressigsäure sowie Trifluoressigsäure, aromatische Sulfonsäuren wie Benzol- und p-Toluolsulfonsäure, Vinylphosphonsäure, vor allem aber Produkte, die aus den bei der vorliegenden Reaktion im Sumpf anfallenden, also höhersiedenden Nebenprodukten durch thermische Behandlung mit Wasser erhalten werden, wobei die Wasserbehandlung z.B. durch Kochen für die Dauer von 5 Minuten bis 2 Stunden erfolgen kann. Als basische Medien lassen sich z.B. tertiäre aliphatische und aromatische Amine und Phosphane (früher als Phosphine bezeichnet) verwenden, wie sie ebenfalls in großer Zahl in der DE-OS 31 20 437 genannt sind.

Das katalytisch wirkende Medium wird im allgemeinen in einer Menge von mindestens 0,1 Gew.-% angewandt, bezogen auf den durchgesetzten Acetoxyäthanphosphonsäuredialkylester. Im Reaktionsgemisch ist die Konzentration naturgemäß wesentlich höher, da es als Reaktionsmedium wirkt. Im allgemeinen beträgt seine Menge 1-20 Gew.-%, wobei naturgemäß die Verwendung möglichst geringer Mengen, zweckmäßig nicht mehr als 5 Gew.-%, bezogen auf den durchgesetzten Acetoxyäthanphosphonsäuredialkylester, bevorzugt ist. Andererseits, und dies gilt vor allem bei Verwendung der mit Wasser behandelten Nebenprodukte der erfindungsgemäßen Reaktion, kann man die katalytisch wirkenden Medien ohne Gefahr für die Durchführbarkeit der Reaktion auch in noch größeren Mengen als 20 Gew.-% anwenden. Der Begriff Gew.-% bezieht sich stets auf das Gewicht des Acetoxyäthanphosphonsäuredialkylesters.

Zwar kommt das vorliegende Verfahren in der Praxis insbesondere für die Herstellung von Vinylphosphonsäuredimethylester und Vinylphosphonsäurediäthylester in Betracht, jedoch können auch Ester mit Alkylgruppen von mehr als zwei C-Atomen hergestellt werden wie Propyl-, Isopropyl-, die verschiedenen Butyl-, Pentyl-, Hexyl-, Heptyl- und Octylgruppen. Im allgemeinen enthalten die erfindungsgemäß hergestellten Ester also Alkylgruppen mit nicht mehr als 8, vorzugsweise nicht mehr als 4 Kohlenstoffatomen, wobei es auch möglich ist, Mischester mit verschiedenen Alkylgruppen einzusetzen und auch herzustellen.

Das erfindungsgemäßige Verfahren kann diskontinuierlich durchgeführt werden, mit besonderem Vorteil aber auch kontinuierlich, wobei man die entstehenden Spaltprodukte, insbesondere den Vinylphosphonsäuredialkylester, laufend aus der Reaktionsmischung herausdestilliert.

Es war überraschend, daß unter den erfindungsgemäß angewandten Bedingungen die Vinylphosphonsäuredialkylester in einer einzigen Verfahrensstufe und in hoher Ausbeute erhalten werden, obwohl bei den Verfahren des Standes der Technik bei höherem Druck und sonst ähnlichen.

Bedingungen lediglich die Abspaltung von Alkylacetaten unter Bildung von Vinylphosphonsäuremonoalkylestern und anderen Verbindungen als Rückstandsprodukten erfolgt. Es ist ein weiterer Vorteil der Erfindung, daß der Einsatz der teuren Carbonsäureorthoester zur Herstellung der reinen Vinylphosphonsäuredialkylester nun entbehrlich wird.

Die erfindungsgemäß hergestellten Vinylphosphonsäuredialkylester können, falls gewünscht, noch durch Destillation weiter gereinigt und statt dessen oder danach auch zu Vinylphosphonsäure hydrolysiert oder auch direkt polymerisiert werden.

Die Erfindung wird durch die folgenden Beispiele erläutert.

Beispiele

1) In einem 1 1-Rührkolben mit Abzugsvorrichtung für den Sumpf und aufgesetzter Destillationskolonne (lichte Weite 25 mm, Länge 0,7 m, Füllung mit 6 mm Raschig-Ringen) mit automatischem Rücklaufteiler, Destillationsvorlage, nachgeschalteter Kältefalle (Tiefkühlung mit Trockeneis) und angeschlossener Vakuumpumpe wurden 50 g rohe Vinylphosphonsäure vorgelegt. Der Kolben wurde auf 210°C aufgeheizt, anschließend wurden bei einem Druck von 10 mbar pro Stunde 200 g Acetoxyäthanphosphonsäuredimethylester eingetropft. Das Rücklaufverhältnis in der Kolonne wurde auf 0,5 eingestellt.

Im Verlauf von 5 Stunden fielen als Destillat 650 g eines Gemisches an, das 6,0 Gew.-% nichtumgesetzten Acetoxyäthanphosphonsäuredimethylester, 80 Gew.-% Vinylphosphonsäuredimethylester, 1,2 Gew.-% Methylacetat und 10 Gew.-% Essigsäure enthielt. In der Kältefalle befanden sich 226 g eines Gemisches, das 78 Gew.-% Methylacetat, 4 Gew.-% Essigsäure und 7 Gew.-% Vinylphosphonsäuredimethylester enthielt. Als Rückstand verblieben 145 g eines Gemisches verschiedener Vinylphosphonsäurederivate, die sich nach thermischer Behandlung mit Wasser wiederum als Katalysator für die vorliegende Reaktion eignen.

Die Ausbeute an Vinylphosphonsäuredimethylester, bezogen auf umgesetzten Acetoxyäthanphosphonsäuredimethylester, betrug 80%.

2) Die Versuchsanordnung war wie in Beispiel 1. Nach Vorlegen von 50 g Vinylphosphonsäure und Aufheizen auf 210°C wurde bei einem Druck von 10 mbar eine Mischung von 95 Gew.-% Acetoxyäthanphosphonsäuredimethylester und 5 Gew.-% Vinylphosphonsäure in einer Menge von ca. 140 g/h eindosiert. Nach Einstellen konstanter Bedingungen wurde der Stand des Sumpfes im Reaktionskolben durch kontinuierliches Ablassen von Sumpfmaterial in ein ebenfalls evakuiertes Gefäß auf einem Volumenstand von ca. 200 ml konstant gehalten. Das Rücklaufverhältnis in der Kolonne wurde auf 1 eingestellt.

Innerhalb von 40 Stunden wurden 5500 g eingesetzt. Man erhielt 3200 g Destillat, 1020 g Produkt aus der Kältefalle und 1225 g Material, das aus dem Sumpf abgelassen wurde.

Das Sumpfmaterial kann nach Aufkochen mit Wasser und Abdestillieren des Wassers wieder als Katalysator für die Spaltung der Einsatzmischung zugesetzt werden. Das Destillat enthielt 89 Gew.-% Vinylphosphonsäuredimethylester und 1,1 Gew.-% Methylacetat. Der Rest war im wesentlichen Essigsäure.

Das in der Kältefalle enthaltene Produkt enthielt 6 Gew.-% Vinylphosphonsäuredimethylester, ca. 4 Gew.-% Methanol und 3 Gew.-% Essigsäure ; der Rest war im wesentlichen Methylacetat.

Bezogen auf eingesetzten Acetoxyäthanphosphonsäuredimethylester betrug die Ausbeute an Vinylphosphonsäuredimethylester 80 Gew.-%.

3) Die Versuchsanordnung war wie in Beispiel 1. Nach Vorlegen von 50 g roher Vinylphosphonsäure und Aufheizen auf 210°C wurden bei einem Druck von 5 mbar pro Stunde 224 g 2-Acetoxyäthanphosphonsäurediäthylester zugetropft. Das Rücklaufverhältnis wurde auf 0,5 eingestellt. Innerhalb von 5 Stunden fielen 825 g Destillat an, das 74 Gew.-% Vinylphosphonsäurediäthylester, 21 Gew.-% Essigsäure, 2 Gew.-% Acetoxyäthanphosphonsäurediäthylester und 1,7 Gew.-% Triäthylphosphat enthielt.

Das in der Kältefalle erhaltene Produkt (180 g) enthielt 7 Gew.-% Vinylphosphonsäurediäthylester, 28 Gew.-% Essigsäure, 55 Gew.-% Äthylacetat und 8 Gew.-% Äthanol.

Der Sumpfinhalt hatte in dieser Zeit um 115 g zugenommen.

## Ansprüche

1. Verfahren zur Herstellung von Vinylphosphonsäuredialkylestern aus 2-Acetoxyäthanphosphonsäuredialkylestern unter Verwendung von Katalysatoren und bei einer Temperatur von 150 bis 270°C, dadurch gekennzeichnet, daß man 2-Acetoxyäthanphosphonsäuredialkylester bei einem Partialdruck der Summe der Komponenten des Reaktionssystems von 1 bis 500 mbar in Berührung mit einem flüssigen, katalytisch wirkenden, sauren oder basischen Medium spaltet und die entstehenden Vinylphosphonsäuredialkylester und andere flüchtige Reaktionsprodukte dampfförmig abzieht.

2. Verfahren nach Anspruch 1, dadurch gekennzeichnet, daß man bei einem Druck über 500 mbar arbeitet, wobei die Differenz zwischen dem Gesamtdruck und dem Partialdruck der Summe der Komponenten des Reaktionssystems durch ein gegenüber diesen unter den Reaktionsbedingungen inertes Gas erzeugt wird.

3. Verfahren nach Anspruch 1, dadurch gekennzeichnet, daß der Gesamtdruck im Reaktionssystem durch Druckverminderung auf 5 bis 500 mbar eingestellt wird.

4. Verfahren nach einem oder mehreren der Ansprüche 1 bis 3, dadurch gekennzeichnet, daß der Partialdruck der Summe der Komponenten des Reaktionssystems zwischen 5 und 100 mbar liegt.

5. Verfahren nach einem oder mehreren der Ansprüche 1 bis 4, dadurch gekennzeichnet, daß bei einer Temperatur von 180 bis 250°C gearbeitet wird.

6. Verfahren nach einem oder mehreren der Ansprüche 1 bis 5, dadurch gekennzeichnet, daß die Alkylgruppen der Ester jeweils 1 bis 8, vorzugsweise 1 bis 4 und insbesondere 1 oder 2 Kohlenstoffatome haben.

7. Verfahren nach einem oder mehreren der Ansprüche 1 bis 6, dadurch gekennzeichnet, daß das katalytisch wirkende Medium in einer Menge von mindestens 0,1 und vorzugsweise in einer Menge von 1 bis 20%, insbesondere bis 5%, verwendet wird, bezogen auf das Gewicht des durchgesetzten Acetoxyäthanphosphonsäuredialkylesters.

8. Verfahren nach einem oder mehreren der Ansprüche 1 bis 7, dadurch gekennzeichnet, daß ein saures katalytisch wirkendes Medium verwendet wird, vorzugsweise ein Produkt, das bei der Reaktion als höhersiedendes Nebenprodukt gebildet und danach in der Hitze mit Wasser behandelt worden ist.

9. Verfahren nach Anspruch 8, dadurch gekennzeichnet, daß die Hitzebehandlung durch Kochen mit Wasser während 5 Minuten bis 2 Stunden erfolgt.

10. Verfahren nach einem oder mehreren der Ansprüche 1 bis 9, dadurch gekennzeichnet, daß die Spaltprodukte kontinuierlich aus der Reaktionszone abgeführt werden.

## Claims

1. A process for the production of dialkyl esters of vinyl phosphonic acid from dialkyl esters of 2-acetoxyethane phosphonic acid by using a catalyst at a temperature in the range from 150 to 270°C, which comprises subjecting dialkyl esters of 2-acetoxyethane phosphonic acid to cleavage by contacting with an acidic or basic liquid, catalytically acting medium at a partial pressure of the total of the components of the reaction system in the range from 1 to 500 mbar, and drawing off the resulting dialkyl esters of vinyl phosphonic acid and other volatile reaction products.

2. A process as claimed in claim 1, wherein the cleavage is carried out at a total pressure above 500 mbar with the proviso that the differential pressure between the total pressure and the partial pressure of the total of the components of the reaction system results from a gas inert towards the components of the reaction system under the reaction conditions.

3. A process as claimed in claim 1, wherein the total pressure is adjusted in the reaction system by depression to a range of from 5 to 500 mbar.

4. A process as claimed in one or more of claims 1 to 3, wherein the partial pressure of the total of the components of the reaction system is in the range of from 5 to 100 mbar.

5. A process as claimed in one or more of claims 1 to 4, wherein the temperature is in the range of from 180 to 250°C.

6. A process as claimed in one or more of claims 1 to 5, wherein the alkyl groups of the ester each have from 1 to 8, preferably from 1 to 4, especially prefered from 1 to 2, carbon atoms.

7. A process as claimed in one or more of claims 1 to 6, wherein the catalytically acting medium is applied in an amount of at least 0.1 and preferably in an amount in the range of from 1 to 20%, especially prefered up to 5%, referred to the weight of the dialkyl ester of the acetoxyethane phosphonic acid introduced in the reaction.

8. A process as claimed in one or more of claims 1 to 7, wherein an acidic catalytically acting medium is used, preferably a product which has been formed in the reaction as a higher boiling by-product and subsequently has been treated in a heated state with water.

9. A process as claimed in claim 8, wherein the heat treatment is carried out by boiling with water for 5 minutes to 2 hours.

10. A process as claimed in one or more of claims 1 to 9, wherein the cleavage products formed are continuously removed from the reaction zone.

## Revendications

1. Procédé pour préparer des vinylphosphonates de dialkyles à partir d'acétoxy-2 éthane-phosphonates de dialkyles, au moyen de catalyseurs et à une température de 150 à 270°C, procédé caractérisé en ce qu'on coupe des acétoxy-2 éthane-phosphonates de dialkyles sous une pression partielle de la somme des composantes du système réactionnel comprise entre 1 et 500 mbar, au contact d'un milieu liquide, acide ou basique, ayant une action catalytique, et on sépare à l'état de vapeur les vinylphosphonates de dialkyles qui se forment et d'autres produits réactionnels volatils.

2. Procédé selon la revendication 1, caractérisé en ce qu'on opère sous une pression supérieure à 500 mbar, la différence entre la pression totale et la pression partielle de la somme des composantes du système réactionnel étant créée par un gaz inerte à l'égard de celles-ci dans les conditions de la réaction.

3. Procédé selon la revendication 1, caractérisé en ce que la pression totale dans le système réactionnel est ajustée à une valeur comprise entre 5 et 500 mbar par diminution de la pression.

4. Procédé selon l'une quelconque des revendications 1 à 3, caractérisé en ce que la pression partielle de la somme des composantes du système réactionnel est comprise entre 5 et 100 mbar

5. Procédé selon l'une quelconque des revendications 1 a 4, caractérisé en ce qu'on opère à une température de 180 à 250°C.

6. Procédé selon l'une quelconque des revendications 1 à 5, caractérisé en ce que les radicaux alkyles des esters contiennent chacun de 1 à 8 atomes de carbone, de préférence de 1 à 4 ou, mieux encore, 1 ou 2.

7. Procédé selon l'une quelconque des revendications 1 à 6, caractérisé en ce que le milieu à action catalytique est utilisé en une quantité d'au moins 0,1, de préférence en une quantité de 1 à 20%, plus particulièrement de 1 à 5%, par rapport au poids de l'acétoxyéthane-phosphonate de dialkyle mis en jeu.

8. Procédé selon l'une quelconque des revendications 1 à 7, caractérisé en ce qu'on utilise un milieu acide à action catalytique, de préférence un produit qui a été formé au cours de la réaction comme produit secondaire à haut point d'ébullition et qui a ensuite été traité à chaud par de l'eau.

9. Procédé selon la revendication 8, caractérisé en ce que le traitement à chaud est effectué par ébullition avec de l'eau pendant une durée de 5 minutes à 2 heures.

10. Procédé selon l'une quelconque des revendications 1 à 9, caractérisé en ce que les produits de coupure sont retirés continuellement de la zone réactionnelle.